(19) Europäisches Patentamt

European Patent Office

Office européen des brevets

(11) **EP 1 039 416 A2**

(12) **EUROPEAN PATENT APPLICATION**

(43) Date of publication:
27.09.2000 Bulletin 2000/39

(51) Int. Cl.⁷: **G06T 5/00**

(21) Application number: **00300659.0**

(22) Date of filing: **28.01.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **05.02.1999 US 245618**

(71) Applicant:
**SCITEX CORPORATION LTD.**
**Herzlia B 46103 (IL)**

(72) Inventor: **Weiss, Alexander**
**Kadima 60920 (IL)**

(74) Representative:
**Freed, Arthur Woolf et al**
**Reginald W. Barker & Co.,**
**Cliffords Inn**
**Fetter Lane**
**London EC4A 1BY (GB)**

(54) **A process for reducing effects of truncation in digital images**

(57) A process for reducing the effect of truncation error in digital imaging comprises: a) Providing a first digital representation of an image, wherein each pixel (60) of said image in said first digital representation is represented by a first number of bits; and b) Transforming said image from said first digital representation to a second digital representation by adding a noise number (110) selected from a predefined range of numbers to each pixel (60) of said first digital representation such that each pixel (150) of the image in said second digital representation is represented by a second number of bits, said second number of bits being smaller than said first number of bits.

*Fig. 6*

EP 1 039 416 A2

**Description**

**Field of the Invention**

The present invention relates to digital imaging, and in particular to the high quality printing of pages with continuous tone images that include vignettes.

**BACKGROUND OF THE INVENTION**

In order to facilitate the reading of the description to follow, a number of terms employed in the art are defined below:

**PDL (Page-Description Language) -** Software that defines how elements such as text and graphics appear on a printed page.
**PostScript -** The industry-standard page-description language by Adobe Systems Inc. of San Jose, US.
**RIP (Raster Image Processor) -** Hardware and/or software that translates data from PostScript and other PDL into raster format.
**CEPS -** Color Electronic Prepress Systems
**Scitex CT (Continuous Tone) and LW (Line Work) -** Proprietary raster file formats by Scitex Corporation, Herzlia, Israel, the applicant hereof.
**Vignette -** a graphic element that has continuous transition from a first color density to a second color density along a certain distance, and having a certain direction.

**The Prior Art**

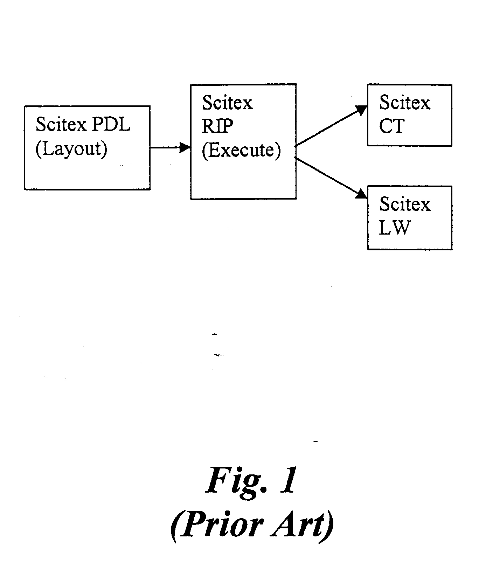

Prior to the advent of the PostScript workflow in the 1985, CEPS manufacturers used specially designed intermediate file formats (such as Scitex CT and LW) to perform color-editing operations, before sending their job to an imagesetter. This process is schematically illustrated in Fig.1. According to the illustrative process of Fig. 1, a page described in PDL is processed by a RIP, which translates it into raster format, which may be, e.g., the Scitex CT or LW format.

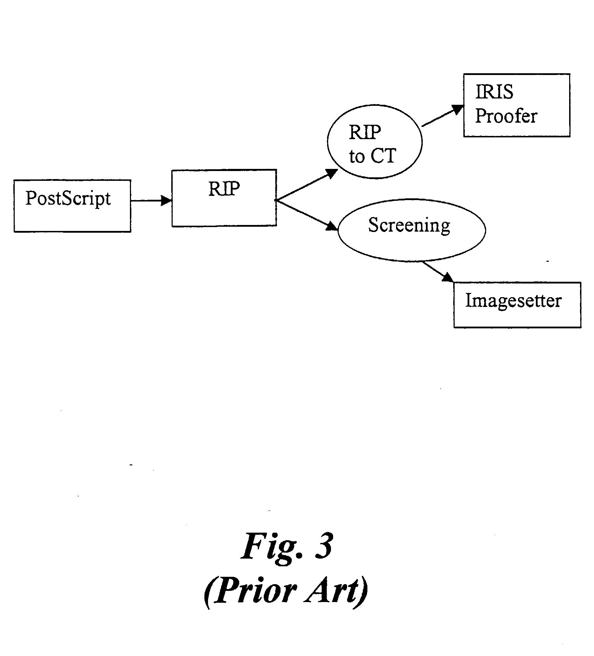

When PostScript page-processing entered the market, the basic new workflow did not require intermediate file formats, such as Scitex's CT and LW, since the early RIPs were literally part of the imagesetters as dedicated parts of computer hardware. This workflow is illustrated in Fig. 3. According to this configuration, the PostScript file is processed by the RIP which translates it either into a CT file which is provided to an IRIS Proofer available from Scitex Corporation, Herzlia, Israel or to a screening process and further to an imagesetter.

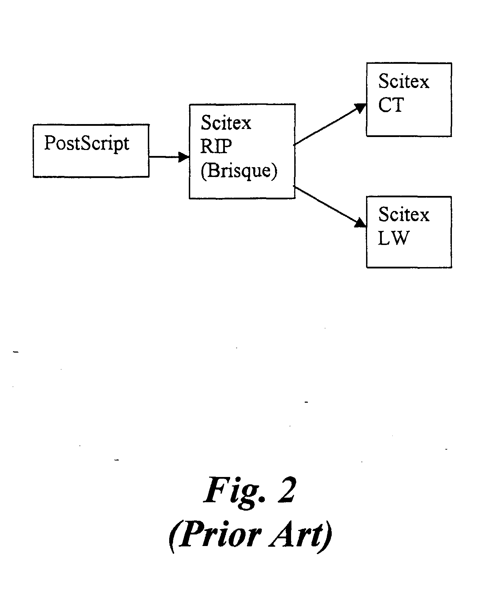

Nowadays, a RIP is conveniently and typically a software program that takes advantage of the powerful processing that is part of modern standard computers. This evolution enabled vendors to alter the standard PostScript process so that the RIP interprets the PostScript into an intermediate manufacturing file format, thus enabling the vendors to continue offering many of the necessary workarounds for PostScript's limitations. The Brisque system (Fig. 2), available from Scitex Corp., Herzlia, Israel follows this trend.

The reason for the use of the intermediate file formats is that the incoming PostScript files are RIPed once, when they come into the system. However, instead of being RIPed into a screened, device specific bitmap, they are translated into a device independent format. This format could be vector-based, as used in the FastRip system (manufactured by Barco, Belgium) or raster-based (such as the Scitex CT/LW). The 'RIP once - output many' concept is highly effective in improving both the predictability and reliability of proof quality, since both proof and final printing use the same digital data as a source. Another aspect is the performance predictability of the printing process that is achieved by separating the RIP from the printing engine.

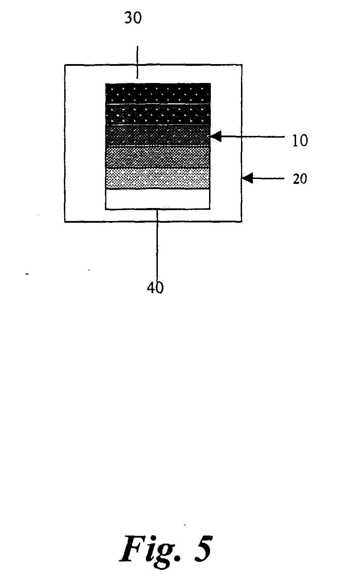

Fig. 5 is a schematic representation of a vignette 10 which is a part of a page 20, starting at the top 30 of its designated rectangle and ending at its bottom 40. When the physical distance defined between the first color density and the second color density on the image is not sufficient to create the desirable number of intermediate colors, or when the number of bits used to represent the color of a pixel is not sufficient, the vignette will lose its smoothness, and a banding effect will be seen, as schematically shown in the figure.

In the past, vendors used their proprietary intermediate file formats to try and overcome this problem, using special image processing techniques, such as used by the Whisper workstation, manufactured by Scitex. These solutions were not suitable for the PostScript workflow, and the RIPs on the market, such as Adobe PostScript Interpreter (provided by Adobe Systems Inc. of San Jose, US) did not supply any solution to the vignette problem.

One solution was implemented by Scitex in an extension program to QuarkXpress called "Scitex Blends" that identifies a vignette in a PostScript file and replace it with an improved Scitex vignette during the RIP process, if done by a Scitex RIP. Another technique for improving vignette quality is described in US patent 5,581,675 "Method of and apparatus for converting format of an image having linear color variation". This technique applies random noise to the boundary area between each pair of adjacent colors in a vignette, to smoothen these transitions.

The main disadvantage of these techniques lies in the fact that they require additional processing of the page described in a PDL, in order to identify the location, shape and direction of a vignetted area. Once identified, the specifications in the PDL can be modified to include an improved vignette. This shortcoming is especially significant when dealing with images that are not digitally created vignettes, but rather include a natural vignette as part of the overall composition. Such vignettes are not readily identifiable and therefore could not be substituted by the above mentioned techniques.

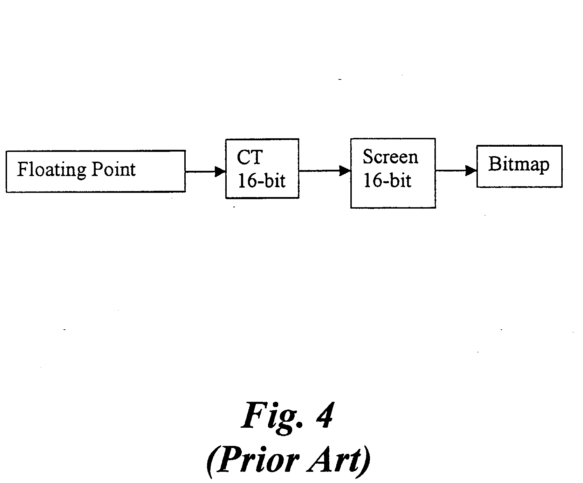

In PostScript Level 3, the latest version of Adobe's imaging language, Adobe provided a solution for vignette quality in the PostScript workflow, by allowing CT pictures to be represented in floating-point representation. This feature enables the RIP to use as many bits as are required to get smooth vignettes. Fig. 4 illustrates this process, the example using 16-bit.

The art has so far failed to solve a practical problem: since there is a need to continue to use prevailing intermediate file formats in which image data is represented in 8 bits per color separation, in order to enjoy other important advantages available through the use of such files such as 'RIP once - print many' and proprietary color editing, a problem of banding or quantization, arises when printing images that are either digitally created vignettes, or have a vignette as background, or as any other part of the image.

It is an object of the present invention to solve the aforesaid quality problem.

It is another object of the invention to provide a method for obviating banding or quantization, that arises when printing images that are either digitally created vignettes, or have a vignette as background, or as any other part of the image, the image data being represented in 8 bits per color separation.

It is still another object of the invention to provide a method that can be applied without discrimination to every page, even if no vignette effect is present, and which does not adversely affect the output file if no vignette is present prior to processing.

It is yet another object of the invention to provide a method that does not require to analyze the file prior to processing, to identify the presence of a vignette or the like effect.

Other objects of the invention will become apparent as the description proceeds.

## SUMMARY OF THE INVENTION

In one aspect the invention is directed to a process for reducing the effect of truncation error in digital imaging comprising:

a) Providing a first digital representation of an image, wherein each pixel (60) of said image in said first digital representation is represented by a first number of bits;
b) Transforming said image from said first digital representation to a second digital representation by adding a noise number (110) selected from a predefined range of numbers to each pixel (60) of said first digital representation such that each pixel (150) of the image in said second digital representation is represented by a second number of bits, said second number of bits being smaller than said first number of bits.

For the purpose of this description the number added to each pixel is termed "noise number". Throughout this description, whenever reference is made to the addition of noise to "each pixel", this should be understood as meaning that the noise is added to each relevant pixel. While it is possible to add the noise number to all pixels indiscriminately, in cases where a vignette is clearly distinguishable from the rest of the image (e.g., in the case of a digitally created vignette), it may sometime be advantageous to add the noise only to the pixels relevant to the vignette.

According to a preferred embodiment of the invention the noise number (110) is a random number. According to another preferred embodiment of the invention the predefined range of numbers from which the noise number (110) is selected is a discrete array of numbers.

The process of the invention can be carried out when the representation of each pixel in the first digital representation (60) is a floating-point representation. According to a preferred embodiment of the invention the second representation (150) is an integer. Of course, the representation of each pixel in the first representation can also be an integer.

According to a preferred embodiment of the invention both the first (60) and the second (150) digital representations of the image are RGB representations. According to another preferred embodiment of the invention both the first (60) and the second (150) digital representations of the image are CMYK representations.

The process is useful regardless of the origin of the digital representation of the image. Suitable images are, e.g., those in which the first RGB representation is created by a digital camera or by a digital scanner, in which case the image may originate from an analog source, e.g., a photograph.

The invention is also directed to an apparatus for reducing the effect of truncation error in digital images comprising image processing means for transforming a first digital representation of an image, wherein each pixel (60) of said image in said first digital representation is represented by a first number of bits, into a second digital representation (150) represented by a second number of bits, said second number of bits being smaller than said first number of bits, said image processing means comprising pixel processing means for adding a noise number (110) selected from a predefined range of numbers to each pixel (60) of said first digital representation.

As stated, the process of the invention may be carried out using either or both of hardware and software. According to a preferred embodiment of the invention said image processing means and said pixel processing means comprise circuitry suitable for digital data processing. According to another preferred embodiment of the invention the image processing means and the pixel processing means comprise computer-driven software for digital data processing.

In another aspect the invention also encompasses an improved digital image from which the effect of a truncation error has been removed or ameliorated by adding at least to a part of its pixels a noise number selected from a predefined range of numbers. Thus, any digital image that has been processed according to the process of the invention also forms a part of the present invention.

Illustrative and non-limitative examples of improved digital images covered by the present invention include images wherein the effect of truncation error is a banding effect, in areas meant to include smooth tone transitions.

All the above and other characteristics and advantages of the invention will be better understood through the following illustrative and non-limitative description of preferred embodiments thereof.

## Brief Description of the Drawings

In the drawings:

Fig. 1 is a schematic description of the pre-PostScript imaging workflow;
Fig. 2 is a schematic description of a PostScript imaging workflow with the use of intermediate file formats;
Fig. 3 is a schematic description of a PostScript imaging workflow without the use of intermediate file formats;
Fig. 4 is a schematic description of a PostScript Level 3 floating point representation conversion;
Fig. 5 is a schematic representation of a vignette with banding effect; and
Fig. 6 is a flow-chart of an algorithm, according to a preferred embodiment of the invention.

## DETAILED DESCRIPTION OF PREFERRED EMBODIMENTS

As explained above, it is an object of the present invention to provide a method for solving the vignette problem in the world of PostScript Level 3, while still preserving the use of the same intermediate file formats with their added value to the imaging process. "The same intermediate files", in this context refers to 8-bit files, such as Scitex CT and LW. Although creating new intermediate file format that holds 16 bit may solve the quality problem of the vignette, this is impractical for reasons of backward compatibility with the numerous systems using those formats, and the need that would arise to upgrade all those systems to the new formats.

Thus, the invention permits to solve the vignette problem in the world of PostScript Level 3, while still preserving the use of the same intermediate file formats, without the need to pre-process the page in PDL for the purpose of identifying vignette areas. As said, the method of the invention is applicable not only to digitally created vignettes, but also to any vignette embedded in any arbitrary image.

A significant advantage of the present invention over existing methods for smoothing color transition areas, lies in the fact that the method of the invention may be applied indiscriminately to each pixel of the image, thus achieving the desired improvement also on image areas that would not otherwise be easy to identify as candidates for improvement.

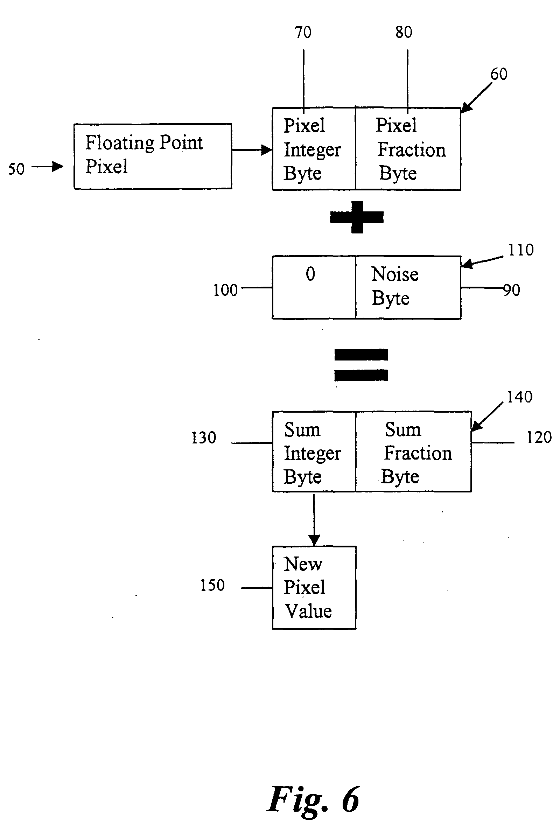

The invention is exemplified in the flowsheet of Fig. 6, which schematically shows a process according to a preferred embodiment of the invention, in which the entire page described in PDL is first RIPed into a floating-point intermediate file, and then the process of the invention is applied to each pixel of said floating-point intermediate file, regardless of whether the pixel belongs to a vignette or not.

In the preferred embodiment of the invention illustrated in Fig. 6, the floating point pixel representation 50 entering the RIP is translated into a 16-bit number 60, in which the most significant byte 70 represents the integer part of said floating point pixel 50 and the least significant byte 80 represents the fraction part of said floating point pixel 50. A random number, 90, with a maximum magnitude of 8 bits, padded by a zero most significant byte 100 to form a 16-bit word 110, is added to the 16-bit pixel representation 60.

The least significant byte 120 of the sum 140 is discarded, leaving the most significant byte 130 of the sum 140 to form the new pixel value 150, which in average represents the original floating point pixel 50.

The smoothing effect is achieved by the distribution of the new pixel values. In creating the random noise values, any suitable random numbers generator can be used. However, according to a preferred embodiment of the invention the seed (starting point) of said the random number generator algorithm is always the same one, to ensure consistent results.

As will be apparent to the skilled person, and as illustrated by the following examples, the values of the pixels resulting from applying the method of the present invention will be distributed in the following way: If the original floating point pixel has an integer value - the value does not change. Otherwise - the probability of the new pixel value being equal to the nearest integer value is proportional to the distance between them.

## Example 1

Input Pixel = 15.00

| 8-bit integer = 0fH | 8-bit fraction = 00H |
| --- | --- |

For any noise added, between 00H and ffH, the resulting pixel value will always be:

Output Pixel = 15D

## Example 2

Input Pixel = 15.75

| 8-bit integer = 0fH | 8-bit fraction = c0H |
| --- | --- |

For noise between 00H and 3fH (64 values = 25%), the resulting pixel value will be 15D.
For noise between 40H and ffH (192 values = 75%), the resulting pixel value will be 16D.
Therefore, the average pixel value will be:

Output Pixel Average = 0.25 * 15 + 0.75 * 16 = 15.75

As will be appreciated by the skilled person, the method of the present invention, is by no means restricted to the printing of PostScript pages, and can easily be applied to the smoothing of any image that undergoes truncation of the number of bits by which it is represented. For example, image capture applications like digital cameras and scanners, that capture 14 or 16 bits data and compress it to 8 bits data, can benefit from the method of the invention which can be applied *mutatis mutandis* to such systems. However, the invention has been described with reference to printing PostScript pages, for the sake of brevity, and additional uses of the invention need not be described in detail, as they are apparent to the skilled artisan.

As will also be apparent to the skilled engineer, reducing the effect of truncation according to the present invention not only enhances images with distinct vignettes, but also improves any image with areas of color transitions that are meant to be smooth, such as, e.g., skin-tone.

Therefore, all the above description and examples have been provided for the purpose of illustration and are not intended to limit the invention in any way, except as defined by the appended claims. Many variations can be effected in the methods of the invention and the systems using it. For instance, different random noise generators can be used, and different imaging systems can exploit the invention, whether for printing or for displaying purposes, all without exceeding the scope of the invention.

**Claims**

1. A process for reducing the effect of truncation error in digital imaging comprising:

   a) Providing a first digital representation of an image, wherein each pixel (60) of said image in said first digital representation is represented by a first number of bits;

   b) Transforming said image from said first digital representation to a second digital representation by adding a noise number (110) selected from a predefined range of numbers to each pixel (60) of said first digital representation such that each pixel (150) of the image in said second digital representation is represented by a second number of bits, said second number of bits being smaller than said first number of bits.

2. A process according to claim 1, wherein the noise number (110) is a random number.

3. A process according to claim 1, wherein the predefined range of numbers from which the noise number (110) is selected is a discrete array of numbers.

4. A process according to claim 1, wherein the representation of each pixel in the first digital representation (60) is a floating-point representation.

5. A process according to claim 1, wherein the representation of each pixel in the second digital representation (150) is an integer.

6. A process according to claim 1, wherein the representation of each pixel in the first digital representation (60) is an integer.

7. A process according to claim 1, wherein the first digital representation (60) is RGB and the second digital representation (150) is RGB.

8. A process according to claim 1, wherein the first digital representation (60) is CMYK and the second digital representation (150) is CMYK.

9. A process according to claim 1 or 7, wherein the first RGB representation (60) is created by a digital camera.

10. A process according to claim 1 or 7, wherein the first RGB representation (60) is created by a digital scanner.

11. A process according to claim 1 or 7, wherein the first RGB representation (60) is created on a digital system.

12. A process according to claim 1 or 8, wherein the first CMYK representation (60) is created on a digital system.

13. Apparatus for reducing the effect of truncation error in digital images comprising image processing means for transforming a first digital representation of an image, wherein each pixel of said image (60) in said first digital representation is represented by a first number of bits, into a second digital representation (150) represented by a second number of bits, said second number of bits being smaller than said first number of bits, said image processing means comprising pixel processing means for adding a noise number selected from a predefined range of numbers to each pixel of said first digital representation.

14. Apparatus according to claim 13, wherein said image processing means and said pixel processing means comprise circuitry suitable for digital data processing.

15. Apparatus according to claim 13, wherein said image processing means and said pixel processing means comprise computer-driven software for digital data processing.

16. An improved digital image from which the effect of a truncation error has been removed or ameliorated by adding at least to a part of its pixels a noise number (110) selected from a predefined range of numbers.

17. An improved digital image according to claim 16, wherein the effect of truncation error is a banding effect.

**18.** An improved digital image, whenever generated by the process of any one of claims 1 to 12.

**Fig. 1**
**(Prior Art)**

**Fig. 2**
**(Prior Art)**

## Fig. 3
## (Prior Art)

| Floating Point | → | CT<br>16-bit | → | Screen<br>16-bit | → | Bitmap |

*Fig. 4*
*(Prior Art)*

30

10

20

40

*Fig. 5*

70        80

60

50 →    Floating Point          Pixel       Pixel
        Pixel            →      Integer     Fraction
                                Byte        Byte

**+**

110

100 —      0        Noise
                    Byte        —90

**=**

140

130 —      Sum       Sum
           Integer   Fraction       — 120
           Byte      Byte

150 —      New
           Pixel
           Value

## *Fig. 6*